# EUROPEAN PATENT APPLICATION

(11) **EP 0 879 990 A2**
(43) Date of publication of application: **25.11.1998**
(21) Application number: 98303902.5
(22) Date of filing: 18.05.1998
(51) Int. Cl.: F21Q 1/00

(54) **Automobile lamp with hologram**

(30) Priority: 19.05.1997 CZ 151797
(71) Applicant: AUTOPAL S.R.O., CZ-741 11 Novy Jicin (CZ)
(72) Inventor: Vejbor, Petr, 779 00 Olomouc (CZ); Cejnek, Milan, 741 01 Novy Jicin (CZ); Ryzi, Zbynek, 680 01 Boskovice (CZ)
(74) Representative: Enskat, Michael Antony Frank

(57) **Abstract**

Automobile lamp with a hologram consisting of a cover glass, refractor and a LED light source carrier with electric contacts in the upper part of said lamp, where in certain distance to the LED light sources (1) a refractor (6) is situated having the form of a transparent board that has axis holograms (2) in its central region and can have an extra-axial hologram (3) on the common optical axis (5) nearer to the refractor (6) rim, whereby, another refraction optics in the form of diffractional optical elements is situated on the inner side of the lamp cover glass or on the opposite side of refractor (6), whereby the geometric LED light sources(1) layout corresponds to the linear or two-dimensional layout.

## Description

The invention relates to a lamp with hologram for motor vehicles, preferably as the third centrally placed brake lamp. The suggested solution makes possible to influence distribution of intensity in the output light bear of the lamp by means of holographic diffraction optics.

In the existing lamps the path of the out going light rays is modified by means of known optical elements, so as by lenses. cylinders or by "cushions". The lamps with diffraction optics - holograms, have usually bulbs with filters as the light source. The third brake lamps according to the prior art are comprised of a combination of a bulb, a filter and a hologram. LEDs as one-colour light sources for automobile lamps give a relatively high light output in the existing third brake lamps. The light path is modified mostly by Fresnel's lenses and by diverging elements of classical optics in this case. Thereby. a relatively wide spaceal angle of the LED light beam makes a flat design of the lamp possible.

Automobile lamp with a hologram according to this invention is comprised of LED light sources placed on a carrier with electric contacts, a refractor as a transparent board with holograms and a cover glass of said lamp in direct optical axis. Thereby, elements of classical refraction optics can be situated on the turned away side of said refractor - transparent board or on the inward side of said lamp cover glass. On the surface of said refractor around the optical axis a phase zonal grid is made by a process as an axial Gabor's hologram. Direction of the diffraction maxima of the diffracted beams can be specified during design of this hologram. Outside the central area of said transparent carrier a Leith-Upatnieks' hologram can also be placed off the axis on the same side of said refractor. By this type of hologram the impinging light can be diverted asymmetrically. Magnitude of this diversion should be defined already during the hologram design. By influence of this diffraction optics - holograms, direction of light diffusion is changed after the passage of light from LED. Thereby, its intensity is distributed in the light beam. The connection of LED light source, the respective diffraction and eventually refraction optics is further called "light segment".

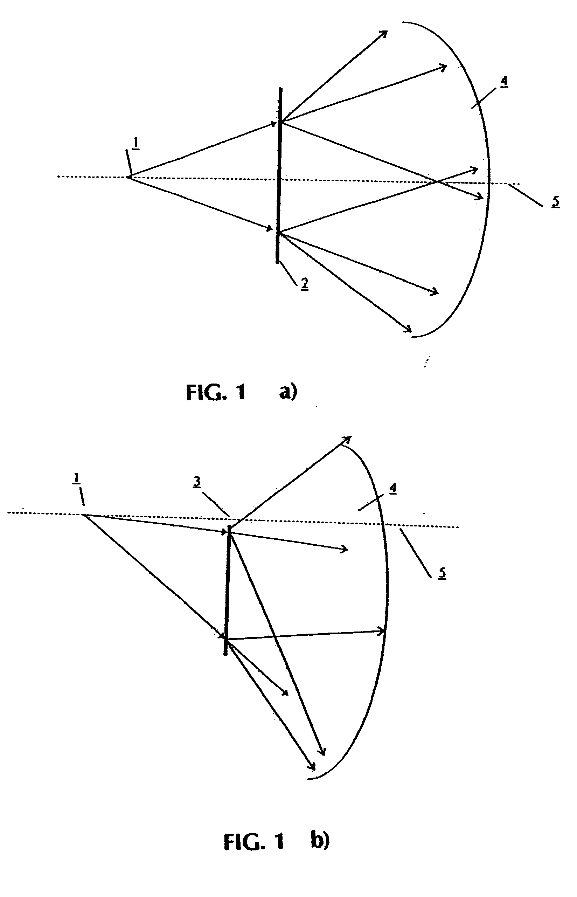

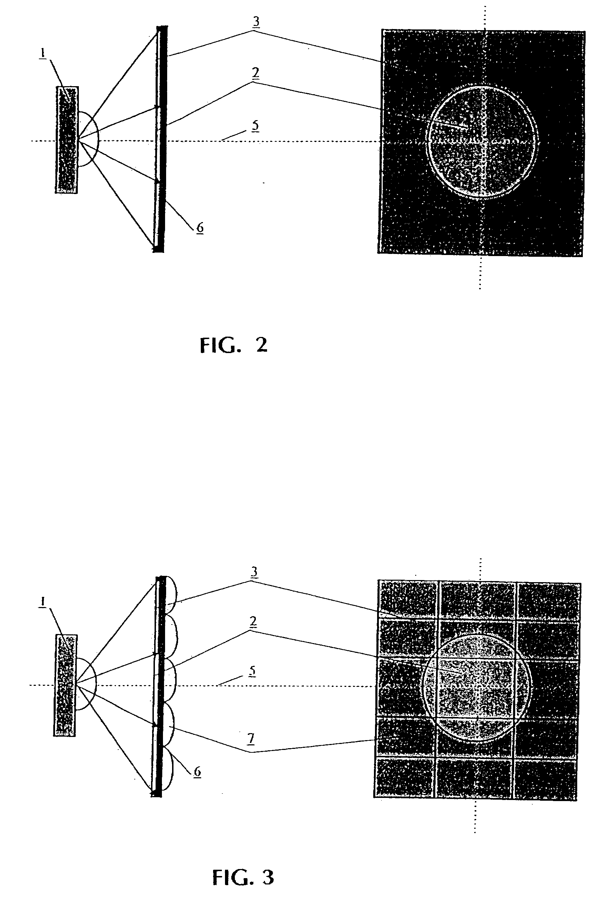

The invention is further illustrated with reference to the accompanying drawings, in which Figure 1 shows a schema of diffraction light wave impinging from a LED light source (a)on an axial hologram and (b)on an extra-axial hologram, Figure 2 shows a section of optical schema of said light segment, Figure 3 shows the same layout as is the previous one with the exception that on the other side of said transparent board diffraction elements - lenses, wedges, cylinders or cushions are made. The following figures show an embodiment of the present invention in the third break lamp with diffraction elements on the inner side of the cover glass of said lamp - Figure 4, or on the other side of said transparent board with hologram - Figure 5. Figure 6 shows examples of surface application of the optical segments in a signalling automobile lamp.

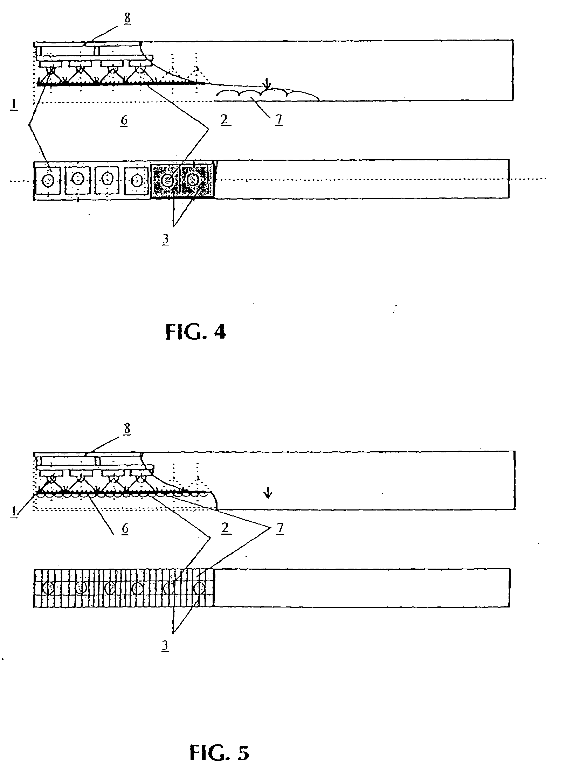

Figures 4 and 5 show light elements of a third automobile break lamp, where in the upper part of said lamp on a carrier with electrical connections LED light sources 1 are situated and in a certain distance from said light sources a refractor 6 is placed, whereby, it has the shape of a transparent board which has axis holograms 2 in its central part and may have an extra-axis hologram 3 in the common optical axis 5 nearer to the refractor 6 rim, whereby, another refraction optics in the form of diffraction optical elements may be placed in the inner side of said lamp cover glass or on the opposite side of a refractor 6. To obtain greater angles (above 20') of LED light incidence on common optical axis the axis hologram can change its nature to become extra-axis hologram 3. Light beams 4 coming out of said light segments impinge on elements of classical refraction optics 7 placed on inner side of said lamp cover glass on case of Figure 4 or they are immediately diffracted by optical elements made on this side of said refractor 6, see Figure 5, at the output from refractor 6.

Layout of said light elements in an automobile lamp with a hologram can be such that the connecting line of their optical axes is formed by a single perpendicular line (light segments in-line) or this connecting line is two-dimensional) layout of light elements). A case can also happen when the optical axes intersect in front of or behind said automobile lamp with hologram and the connecting line of optical axes of light segments is so situated generally in space, what is shown in Figure 6.

Automobile lamp with a hologram according to the present invention can be used in illumination systems of motor vehicles operated on surface roads.

## Claims

1. An automobile lamp with a hologram consisting of a cover glass, a refractor and a LED light source carrier with electrical contacts in the upper part of said lamp, characterised in that in a certain distance to the LED light sources (1) a refractor (6) is situated having the form of a transparent board that has axis holograms (2) in its central region and can have an extra-axial hologram (3) on the common optical axis (5) nearer to the refractor (6) rim, whereby another refraction optics in the form of diffraction optical elements may be placed on inner side of said lamp cover glass or on the opposite side of said refractor (6).

2. An automobile lamp with a hologram according to claim 1, characterised in that the geometric layout of said LED light sources (1) corresponds to the linear or two-dimensional layout.
